# EUROPEAN PATENT APPLICATION

(11) **EP 4 641 463 A1**
(43) Date of publication of application: **29.10.2025**
(21) Application number: 25158701.0
(22) Date of filing: 18.02.2025
(51) Int. Cl.: G06Q 20/20, G06Q 20/40, G07G 3/00

(54) **DETECTION DEVICE, METHOD, AND SYSTEM FOR RETAIL TRANSACTION PROCESSING**

(30) Priority: 23.04.2024 JP 2024070012
(71) Applicant: Toshiba TEC Kabushiki Kaisha, Tokyo 141-8562 (JP)
(72) Inventor: Hiramatsu, Naotake, 141-8562 Tokyo (JP)
(74) Representative: Bandpay & Greuter

(57) **Abstract**

According to one embodiment, a fraudulent act detection device for cash register systems has a processor that receives images from a camera to acquire images of a customer at a point-of-sale terminal and event signals corresponding to operations of the customer at the terminal. The processor processes a camera image to detect a camera event corresponding to operations at the point-of-sale terminal, stores a terminal event indicated in the received event signals in an event log of the storage unit, then detect reportable events of different types related to possible fraudulent acts of the customer. The processor sets a flag indicator for each of different types of act to indicate the detection of reportable events and output a report to the point-of- sale terminal if the number of reportable events exceeds a reporting threshold value. The report causes the terminal to display a warning to the customer.

## Description

### FIELD

Embodiments described herein relate generally relate to a fraud detection device, method, and system for processing of retail transactions at a store or the like.

### BACKGROUND

Recently, due to labor shortages and soaring labor costs, a self-checkout system where a customer performs everything from registration of items to payment processing has become popular. On the other hand, with such systems there are concerns about fraudulent acts by the customer such as packing a bag without scanning merchandise. Therefore, a system has been developed to detect fraudulent acts by capturing the buyer's behavior with a camera and analyzing the image with Artificial Intelligence (AI) then making a report.

However, in any system using such AI image analysis, there is a possibility that a non-fraudulent act might be mistakenly detected as a fraudulent act. Therefore, if a report is made every time fraud is detected, there will be high number of false or mistaken detections , leading to complaints from false-accused buyers.

### DISCLOSURE OF INVENTION

To this end, there is provided a fraudulent act detection device for cash register systems according to claim 1. There is also provided a fraudulent act detection device for cash register systems according to claim 3. There is further provided a fraudulent act detection method for cash register systems according to claim 10. Preferred embodiments are set out in the dependent claims.

### BRIEF DESCRIPTION OF THE DRAWINGS

FIG. 1 depicts a self-checkout system according to an embodiment.
FIG. 2 depicts an external configuration of a self-POS terminal.
FIG. 3 is a block diagram of a self-POS terminal.
FIG. 4 is a block diagram of a detection terminal.
FIG. 5 is a schematic diagram of a data structure of a report table.
FIG. 6 is a sequence diagram illustrating operations related to detection and reporting of reporting acts in a detection terminal along with operations of a camera and a self-POS terminal in the same cash register system.
FIG. 7 is a flowchart of information processing executed by a processor of a detection terminal.
FIG. 8 is a schematic operation diagram relating to a reporting act item "omitted scan."
FIG. 9 is a schematic operation diagram relating to a reporting act item "weight error".
FIG. 10 is a schematic operation diagram relating to a reporting act item "expensive merchandise error".
FIG. 11 is a schematic operation diagram relating to a reporting act item "cart-bottom merchandise error".
FIG. 12 is a schematic operation diagram relating to a reporting act item "number of purchased items: large".
FIG. 13 is an example of a registration screen displayed on a touch panel of a self-POS terminal.
FIG. 14 is an example of a registration screen of a self-POS terminal that has received a report of a reporting act item "omitted scan."
FIG. 15 is an example of a monitoring screen displayed on a display of a monitoring terminal.
FIG. 16 is a sequence diagram illustrating operations related to detection and reporting of reportable acts by a detection terminal of a second embodiment along with operations of a camera and a self-POS terminal in the same cash register system.
FIG. 17 is a flowchart of information processing executed by a processor of a detection terminal in a second embodiment.
FIG. 18 is a block diagram of a detection terminal in a third embodiment.
FIG. 19 is a schematic diagram of a data structure of a combination table.
FIG. 20 is a flowchart of information processing executed by a processor of a detection terminal in a third embodiment.
FIG. 21 depicts an external configuration of a self-POS terminal in another embodiment.
FIG. 22 is a screen transition diagram for screens displayed on a buyer display of a self-POS terminal in the other embodiment.
FIG. 23 depicts a self-checkout system according to another embodiment.

### DETAILED DESCRIPTION

In general, according to one embodiment, there is provided a detection device for preventing or reducing fraudulent acts efficiently and while reducing the risk of reporting false detections to customers.

According to one embodiment, a fraudulent act detection device for cash register systems includes a storage unit, a communication interface, and a processor. The processor is configured to: receive camera images from a camera positioned to acquire images of a customer at a point-of-sale terminal; receive event signals from the point-of- sale terminal corresponding to operations of the customer at the point-of-sale terminal; process a camera image received from the camera to detect a camera event corresponding to operations of the customer at the point-of-sale terminal; store a terminal event indicated in the received event signals in an event log of the storage unit; detect reportable events of different types related to possible fraudulent acts of the customer at the point-of- sale terminal based on at least one of the camera event and the event log; set a flag indicator for a first type act to indicate the detection of a first type reportable event; set a flag indicator for a second type act to indicate the detection of a second type reportable event; and output a report notification to the point-of-sale terminal if the number of set flag indicators indicating the detection of reportable events exceeds a reporting threshold value, the report notification causing the point-of-sale terminal to display a warning notification to the customer at the point-of-sale terminal.

Hereinafter, certain example embodiments of an information processing device for preventing or reducing fraudulent acts efficiently and effectively while reducing the risk of reporting false detections to customers are explained using the drawings.

### First Embodiment

First, an embodiment of a self-checkout system to which an information processing device is applied will be described.

### Explanation of self-checkout system

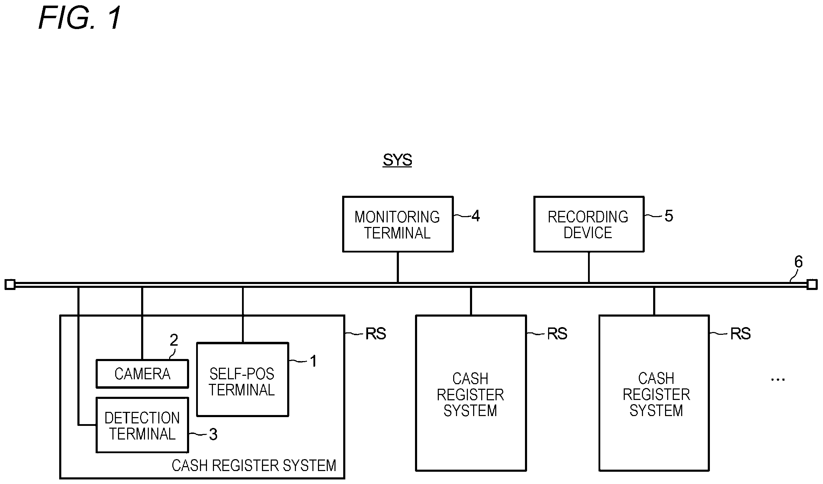

FIG. 1 is a schematic configuration diagram showing a self-checkout system SYS according to an embodiment. The self-checkout system SYS includes a plurality of self-POS terminals 1, a plurality of cameras 2, a plurality of detection terminals 3, a monitoring terminal 4, and a recording device 5. Specifically, in the self-checkout system SYS of the present embodiment, one camera 2 and one detection terminal 3 are associated with each self POS terminal 1 to form a cash register system RS. Each cash register system RS is provided in the accounting (checkout) area of the store. In the self-checkout system SYS, the self-Point of Sales (POS) terminal 1, the camera 2, and the detection terminal 3 of each cash register system RS are connected to the monitoring terminal 4 and the recording device 5 via a communication network 6, such as a Local Area Network (LAN). In the present embodiment, the detection terminal 3 (corresponding to fraudulent act detection device) functions as an information processing device capable of preventing or reducing fraudulent acts efficiently and effectively while reducing the risk of reporting false detection to buyers.

In the self-POS terminal 1, a buyer who has completed shopping becomes a user. A buyer, who places purchased merchandise in a shopping basket or the like, and moves to the accounting area at the sales floor where merchandise is displayed, operates the self-POS terminal 1 and performs self-settlement relating to transactions from registration of the purchased merchandise to payment of the price. The self-POS terminal 1 is an example of a full self-service transaction processing device. The transaction processing device need not be a full self-service device. In some cases a buyer may perform registration of purchased merchandise at another device, and the transaction processing device of embodiment may be a settlement device at which the buyer perform operations related to payment of the transaction price based on the registered merchandise registered.

The self-POS terminal 1 transmits POS event signals which provide event (POS event) information providing the details of operations of the buyer at the self-POS terminal 1 to the corresponding detection terminal 3 via a communication network 6. In this context, a POS event is an example of a second event indicating the buyer behavior details as reported from the self-POS terminal 1 to the detection terminal 3.

The camera 2 captures images of the behavior of a buyer operating the self-POS terminal 1, and transmits the captured camera images to the corresponding detection terminal 3 via the communication network 6. In this example, camera images are transmitted via the communication network 6, but it may be assumed that camera images may be transmitted directly from the camera 2 to the detection terminal 3 via a Universal Serial Bus (USB) cable or the like in other examples. The camera 2 can also transmit camera images to the recording device 5 via the communication network 6.

The detection terminal 3, which functions in this context as an information processing device, is provided with an AI image analysis engine. The image analysis engine analyzes camera images sent from the camera 2, detects the behavior of the buyer, and specifies camera events corresponding to that detected behavior. The camera 2 is one example of a sensor that detects the behavior of a buyer, and a camera event is one example of a first event that has been determined based on the output of this sensor. The detection terminal 3 detects a buyer's act requiring a report based on the camera events as identified by the image analysis engine and/or POS events acquired from the self-POS terminal 1. In some cases, a detection terminal 3 can detect a reportable act based only on a POS event or a camera event. The detection terminal 3 reports the detected act, that is, the reportable act, to the self-POS terminal 1 via the communication network 6. The detection terminal 3 reports the reportable act not only to the self-POS terminal 1, but also to the monitoring terminal 4.

The monitoring terminal 4 is operated by a clerk or a supervisor who monitors a plurality of self POS terminals 1 connected via the communication network 6. The monitoring terminal 4 has a display. The monitoring terminal 4 displays information necessary for monitoring the plurality of self POS terminals 1 on the display. The displayed information also includes information about the reportable acts detected by the detection terminal 3.

A clerk as a supervisor surveils the self-POS terminals 1 based on information displayed on the display. The clerk recognizes that an act presumed to be a fraudulent act has been performed by a buyer from the reportable acts detected by the detection terminal 3 and sent to the monitoring terminal 4. A clerk can be called an attendant or supervisor in this context. The monitoring terminal 4 is an example of a supervisor terminal. The monitoring terminal 4 may be connected wirelessly to the communication network 6. For example, monitoring terminal 4 may be a tablet terminal that can be carried by a clerk.

The recording device 5 is a storage device connected to a communication network 6 such as Network Attached Storage (NAS). The recording device 5 stores camera images from each camera 2.

### Explanation of self-POS terminal

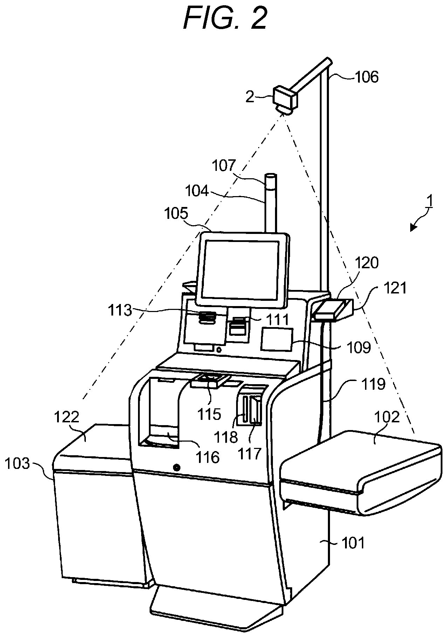

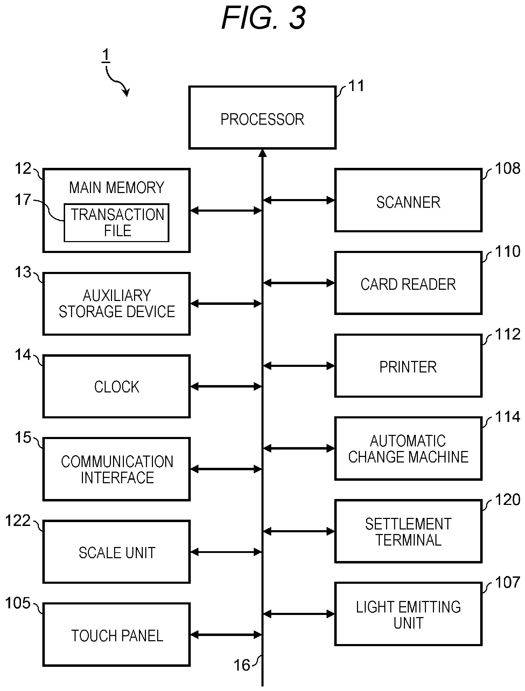

FIG. 2 is a perspective view of the self-POS terminal 1, and FIG. 3 is a block diagram of the self-POS terminal 1. As shown in FIG. 2, the self-POS terminal 1 is provided with a main body 101 on the floor surface. The self-POS terminal 1 has is a basket stand 102 and a bagging stand 103 across the main body 101. The basket stand 102 is for buyers coming from the sales floor to place baskets or items to be purchased. The bagging stand 103 is plastic bags or a shopping bag brought by the buyer, so-called personal bags. to be placed to be filled with purchased merchandise. A display pole 104, a touch panel 105, and a camera pole 106 are attached to the top of the main body 101. The buyer stands in front of the main body 101 in FIG. 2 and performs work such that the screen of the touch panel 105 can be seen. Therefore, when viewed from the buyer's perspective, the basket stand 102 on the right side and the bagging stand 103 on the left side across the main body 101. In the following explanation, the side where the buyer stands is referred to as the front side of the main body 101, the side where the bagging stand 103 is provided is called the left side of the main body 101, and the side where the basket stand 102 is provided is called the right side of the main body 101.

The display pole 104 has a light emitting unit 107 that selectively emits blue and red light, for example. The display pole 104 indicates the current operating state of the self-POS terminal 1, such as standby, in-use, calling, and error, according to the light emitting color of the light emitting unit 107.

The touch panel 105 includes a display for displaying various screens related to transactions, such as registration or accounting to a user operating the self-POS terminal 1, and a touch sensor for detecting touch inputs on the screen by the user. At the self-POS terminal 1, the user/operator is usually a store customer (buyer). The touch panel 105 can also display information that is transmitted from the detection terminal 3 via the communication network 6.

The camera pole 106 has a camera 2 attached to its tip. The angle of view, that is, imaging range or field of view of the camera 2 covers the area from the basket stand 102 to the bagging stand 103, as shown by a dashed line in FIG. 2. In other words, the mounting position and posture of the camera 2 are set such that the user's movements and behaviors while operating the self-POS terminal 1 can be imaged. More specifically, the camera 2 is set to capture at least the opening of a shopping basket on the basket stand 102 or a shopping cart positioned above the basket stand 102, the opening for putting merchandise in a shopping bag or personal bag placed on the bagging stand 103, and the route along which the merchandise normally moves from when taken out of the shopping basket until put into the shopping bag or personal bag placed on the bagging stand 103.

On the front of the main body 101, a reading window 109 for a scanner 108 (see FIG. 3), a card insertion port 111 for a card reader 110 (see FIG. 3), and an issuing port 113 for receipts printed by a printer 112 (see FIG. 3) are formed. Also, on the front of the main body 101, a coin slot 115, a coin dispenser 116, a banknote slot 117, and a banknote dispenser 118 for an automatic change machine 114 (see FIG. 3) are provided.

A communication cable 119 extends from the right side of the main body 101 and is connected to a settlement terminal 120 for cashless settlement. The settlement terminal 120 is placed on a stand 121 provided on the upper right side of the main body 101.

The bagging stand 103 includes a scale unit 122. The scale unit 122 measures the total weight of merchandise, or the like, that has been placed on the bagging stand 103.

As shown in FIG. 3, the self-POS terminal 1 is provided with a processor 11, a main memory 12, an auxiliary storage device 13, a clock 14, a communication interface 15, and a system transmission line 16 in addition to a touch panel 105, a light emitting unit 107, a scanner 108, a card reader 110, a printer 112, an automatic change machine 114, a payment terminal 120, and a scale unit 122. The system transmission line 16 provides or comprises an address bus, a data bus, a control signal line, and the like. The system transmission line 16 connects the processor 11 and otherunits directly or indirectly via a signal input and output (I/O) circuit. The system transmission line 16 carries data signals exchanged between the various components. The self-POS terminal 1 is configured by connecting the processor 11, the main memory 12, the auxiliary storage device 13, the clock 14, and the communication interface 15 via the system transmission line 16.

The processor 11 controls each unit to implement the various functions of the self-POS terminal 1, according to an operating system and/or an application program. The processor 11 is, for example, a central processing unit (CPU). Examples of the processor 11 may include a Micro Processing Unit (MPU), a System on a Chip (SoC), a Digital Signal Processor (DSP), a Graphics Processing Unit (GPU), an Application Specific Integrated Circuit (ASIC), a Programmable Logic Device (PLD), a Field-Programmable Gate Array (FPGA), or the like. Alternatively, the processor 11 may be a combination of a plurality of these.

The main memory 12 includes a non-volatile memory area and a volatile memory area. The main memory 12 stores the operating system and the application program in the non-volatile memory area. The main memory 12 stores data necessary for the processor 11 to execute processing for controlling each unit in a non-volatile or volatile memory area. The main memory 12 uses the volatile memory area as a work area into which data is appropriately rewritten by the processor 11. A nonvolatile memory area is, for example, a Read Only Memory (ROM). The volatile memory area is, for example, a Random Access Memory (RAM).

As the auxiliary storage device 13, for example, an Electric Erasable Programmable Read-Only Memory (EEPROM), a Hard Disk Drive (HDD), a Solid-State Drive (SSD), or the like can be used. The auxiliary storage device 13 stores data used by the processor 11 to perform various processes, data generated by the process performed by the processor 11, or the like. The auxiliary storage device 13 may also store the above-mentioned application program.

The clock 14 measures the date and time. The processor 11 processes the date and time measured by the clock 14 as the current date and time.

The communication interface 15 performs data communication with an external device connected via the communication network 6 according to a communication protocol set in advance. The external device is typically the detection terminal 3. The external device may be the monitoring terminal 4 or other equipment such as a server device.

The scanner 108 reads the code symbol from merchandise held over the reading window 109. A code symbol representing a merchandise code, or the like, for identifying the merchandise is attached to each merchandise sold at a store. The code symbol is, for example, a bar code. The code symbol may be, for example, a two-dimensional data code. The scanner 108 may be a type that reads code symbols by scanning laser light or a type that reads code symbols from images captured by an imaging device.

The card reader 110 reads card data recorded on a card medium such as a credit card or points card. The card reader 110 receives a card medium inserted into the card insertion port 111 into the main body 101, reads card data, and then discharges the card from the card insertion port 111.

The printer 112 prints receipt data, or the like, representing the details of a commercial transaction on receipt paper. Receipt paper with receipt data printed on it is discharged from the issuing port 113, cut by a cutter, and issued as a receipt.

The automatic change machine 114 includes a coin unit and a banknote unit. The coin unit sorts coins inserted into the coin slot 115, identifies the denomination, and stores the coins in a safe by denomination. The coin unit takes coins of the corresponding denomination from the safe based on change data, and pays the coins out to the coin dispenser 116 as appropriate. The banknote unit sorts banknotes inserted into the banknote slot 117, identifies denominations, and stores the banknotes in a safe by denomination. The banknote unit takes banknotes of the corresponding denomination from a safe based on change data, and pays the banknotes out to the banknote dispenser 118 as appropriate.

The settlement terminal 120 may read and rewrites electronic money data recorded on an electronic money medium, for example. The electronic money medium can be a contactless IC card in some examples. In other examples, the electronic money medium may be an electronic apparatus such as a smartphone or tablet terminal.

The self-POS terminal 1 uses part of the volatile memory area in the main memory 12 as an area of the transaction file 17. The transaction file 17 is a data file for storing data relating to a commercial transaction processed by the self-POS terminal 1. The transaction file 17 stores, for example, data such as transaction numbers, purchased merchandise data, total numbers of items, total amounts, discount amounts, settlement amounts, and the like. The transaction number is a series of numbers issued every time a commercial transaction is processed at the self-POS terminal 1. The purchased merchandise data is record data generated for each item of merchandise sold in the commercial transaction identified by the transaction number. Here, the purchased merchandise data is composed of entries such as merchandise codes, merchandise names, prices, the number of items, amounts, or the like. In this context, the number of items is the number of items of merchandise identified by the same merchandise code. The amount is the amount for the number of purchased items. The transaction file 17 can store a plurality pieces of purchased merchandise data. The total number of items is obtained by adding the number of items of each piece of purchased merchandise data. The total amount is the amount obtained by summing the amount of each piece of purchased merchandise data. The discount amount is the amount discounted from the total amount. The settlement amount is the amount obtained by subtracting the discount amount from the total amount.

### Explanation of configuration of detection terminal

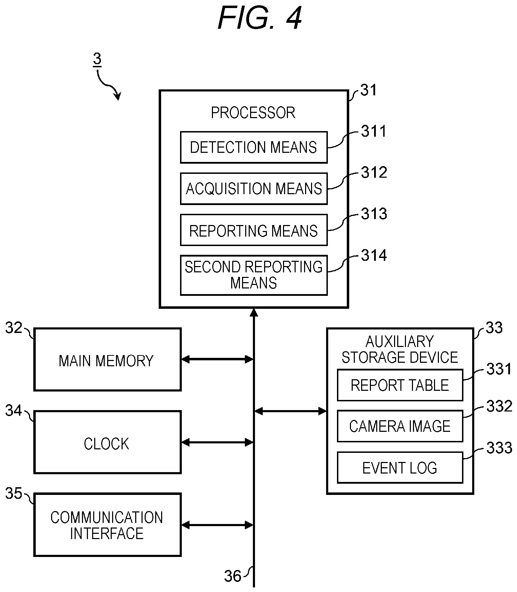

FIG. 4 is a block diagram of the detection terminal 3. The detection terminal 3 includes a processor 31, a main memory 32, an auxiliary storage device 33, a clock 34, a communication interface 35, and a system transmission line 36. The system transmission line 36 includes an address bus, a data bus, a control signal line, and the like. The system transmission line 36 connects the processor 31 and other units directly or via a signal input and output circuit, and transmits data signals exchanged between each other. The detection terminal 3 is configured by connecting the processor 31, the main memory 32, the auxiliary storage device 33, the clock 34, and the communication interface 35 via the system transmission line 36. The detection terminal 3 can be referred to as a transaction processing device.

The processor 31 controls each unit to implement the various functions of the detection terminal 3, according to an operating system or an application program. The processor 31 is, for example, a CPU. The processor 31 may be multi-core/multi-threaded, and can execute a plurality of processes in parallel. The processor 31 may, for example, be an MPU, SoC, DSP, GPU, ASIC, PLD, or FPGA. Alternatively, the processor 31 may be a combination of a plurality of these.

The main memory 32 includes a non-volatile memory area and a volatile memory area. The main memory 32 stores the operating system or the application program in the non-volatile memory area. The main memory 32 stores data necessary for the processor 31 to execute processing for controlling each unit in a non-volatile or volatile memory area. The main memory 32 uses the volatile memory area as a work area into which data is appropriately rewritten by the processor 31. The non-volatile memory area is, for example, a ROM. The volatile memory area is, for example, a RAM.

For example, an EEPROM, HDD, or SSD, or the like, can be the auxiliary storage device 33. The auxiliary storage device 33 stores data used by the processor 31 to perform various processes, data generated by the process performed by the processor 31, or the like. The auxiliary storage device 13 may also store the above-mentioned application program.

The application program stored in the main memory 32 or the auxiliary storage device 33 includes, for example, an information processing program or software instructions for making a computer or processor thereof function as an information processing device according to an embodiment. Similar, an image analysis program for implementing an AI image analysis engine or the like may be incorporated. The method of installing these programs in the main memory 32 or the auxiliary storage device 33 is not particularly limited. The program can be provided in the main memory 32 or the auxiliary storage device 33 by being recorded on a removable recording medium or by being distributed by communication via a network. The recording medium may be in any format such as a CD-ROM, a memory card, or the like as long as it can store a program and is readable by a computer device.

The clock 34 tracks the date and time. The processor 31 processes the date and time measured by the clock 34 as the current date and time.

The communication interface 35 performs data communication with an external device connected via the communication network 6 according to a communication protocol set in advance. Examples of an external device include the self-POS terminal 1, the camera 2, the monitoring terminal 4, and the recording device 5.

The detection terminal 3 with such a configuration uses part of the storage area of the auxiliary storage device 33 as an area of a report table 331, a camera image storage unit 332, and an event log storage unit 333.

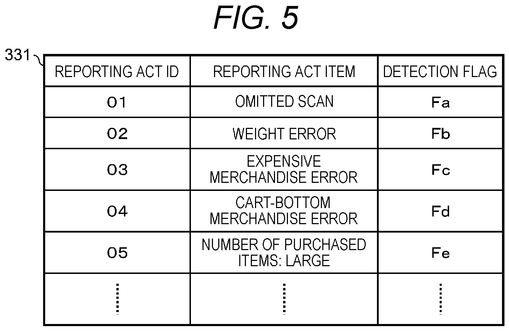

As shown in FIG. 5, the report table 331 is a data table associating a reporting act ID with a reporting act type and a detection flag setting. The reporting act ID is unique identification information set for each reporting act type that is a buyer's act requiring a report be sent to a transaction processing device (e.g., self-POS terminal 1).

The reporting act item column provides a name representing a type of buyer's act requiring a report to the self-POS terminal 1. In the present embodiment, five types of reportable acts are used: "omitted scan," "weight error," "expensive merchandise error," "cart-bottom merchandise error," and "number of purchased items: large". These types of each reporting act will be described below. These examples are non-limiting and other or additional reportable act types may be adopted.

The detection flag is 1-bit data for identifying whether the reporting act of the reporting act item identified by the corresponding reporting act ID has been detected. In the present embodiment, the detection flag indicating that the reporting act has not been detected is set to "0," and the detection flag indicating that the reporting act has been detected is set to "1."

The camera image storage unit 332 sequentially stores camera images from the camera 2. The event log storage unit 333 sequentially stores POS events from the self-POS terminal 1 in a POS event log and camera events (as detected in the camera images) in a camera event log. The camera image storage unit 332 and the event log storage unit 333 can delete previously stored contents as necessary at any timing, for example, outside of business hours of a store.

As shown in FIG. 4, the processor 31 of the detection terminal 3 provides functions of detection means 311, acquisition means 312, reporting means 313, and second reporting means 314. These functions are implemented by performing information processing according to an information processing program and an image analysis program.

The detection means 311 provides a function of detecting a reportable act of a buyer requiring a report to a transaction processing device, that is, the self-POS terminal 1. The detection means 311 detects reportable acts by type based on a first event (e.g., a camera event) determined based on analysis (e.g., by an image analysis engine) of output from a sensor that detects buyer's behavior such as the camera 2 and/or a second event (e.g., a POS event) indicating behavior details of the buyer as reported from the self-POS terminal 1. The detection means 311 detects reportable acts classified into different types such as "omitted scan," "weight error," "expensive merchandise error," "cart-bottom merchandise error," and "number of purchased items: large."

The acquisition means 312 provides a function for acquiring the type of reportable act detected by the detection means 311. The acquisition means 312 stores information indicating the type of reportable act as acquired. The information indicating the type of reportable act can be associated with a detection flag in the report table 331. In other words, the acquisition means 312 updates a detection flag in the report table 331 corresponding to the type of reportable act detected by the detection means 311 from "0" to "1," and thus stores information indicating the type of reportable act that has been reported. For example, when the reportable act detected by the detection means 311 is a reporting act item "omitted scan," the acquisition means 312 updates the detection flag Fa from "0" to "1". When the detected reportable act is a reporting act item "weight error," the acquisition means 312 updates the detection flag Fb from "0" to "1." When the detected reportable act is a reporting act item "expensive merchandise error," the acquisition means 312 updates the detection flag Fc from "0" to "1". When the detected reportable act is a reporting act item "cart-bottom merchandise error," the acquisition means 312 updates the detection flag Fd from "0" to "1". When the detected reportable act is a reporting act item "number of purchased items: large" (that is, when the number of purchased items reaches a threshold number of items), the acquisition means 312 updates the detection flag Fe from "0" to "1".

The reporting means 313 makes a report when reports of a plurality of reportable acts are acquired by the acquisition means 312 in the same transaction. In other words, the reporting means 313 reports once at least two types of detection flags become "1" in one transaction. For example, when the detection flag Fa and the detection flag Fb become "1," the reporting means 313 reports that the reporting act items "omitted scan" and "weight error" have both been detected. The reporting means 313 makes a report to a transaction processing device such as self-POS terminal 1. The reporting means 313 makes a report once a threshold value for the reporting acts is exceeded.

The second reporting means 314 makes a report to the supervisor terminal (monitoring terminal 4) whenever a reportable act is detected by the detection means 311. The second reporting means 314 makes a report to the monitoring terminal 4 whenever a reportable act is detected regardless of the type of reportable act and any other previous detections of reportable acts.

### Explanation of operation of detection terminal

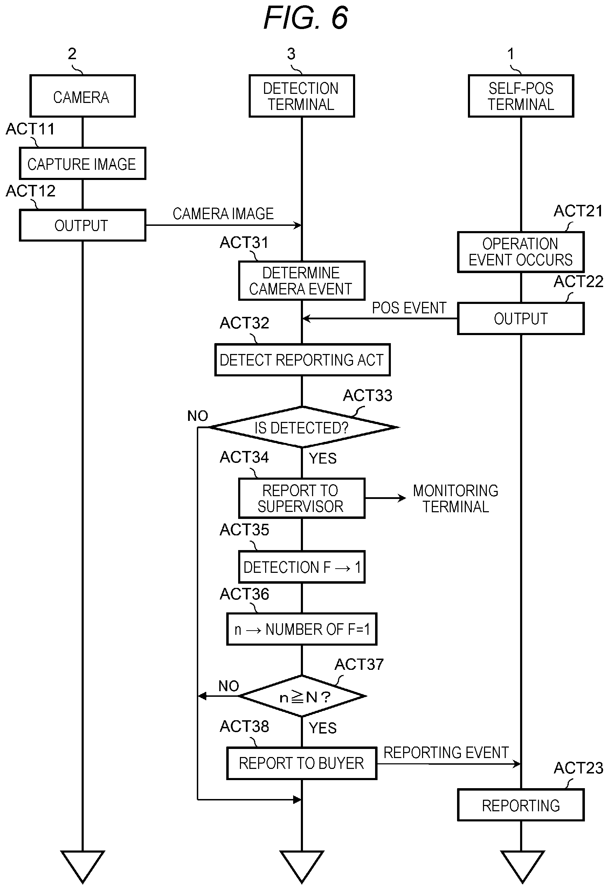

FIG. 6 is a series of sequence diagram illustrating operations related to detection and reporting of reporting acts in the detection terminal 3 along with the operations of the camera 2 and the self-POS terminal 1 in the same cash register system RS.

As shown in FIG. 6, the camera 2 captures an image (ACT11) and outputs the captured camera image to a corresponding detection terminal 3 (ACT12). For example, the camera 2 has a human detection function, and transmits the camera images when the buyer is detected in the captured camera images. Alternatively, the camera 2 has a moving object detection function instead of a human detection function, and may transmit the camera images whenever a moving object is detected as being in a camera image. In some examples, when camera 2 itself does not have such detection functions, a human detection sensor or the like may be separately disposed on the self-POS terminal 1, and the camera 2 may be triggered to capture and/or transmit images only when a person is detected by the human detection sensor output. Thus, the camera 2 can transmit camera images on a per transaction basis or the like. It should be noted that the camera 2 transmits camera images not only to the detection terminal 3 but also to the recording device 5. The recording device 5 records camera images in a data file in chronological order. The recording device 5 records camera images in separate data files by adding a different file name for each camera 2, for example.

The detection terminal 3 receives the camera image then analyzes the camera image using an AI image analysis engine to detect the behavior of the buyer, and determines a camera event corresponding to the detected behavior (ACT31). For example, when the detection terminal 3 detects a buyer taking merchandise from the basket stand 102 in a camera image, it determines a camera event corresponding to that behavior type. Hereafter, this camera event type is called a merchandise take-out event CIa. The merchandise take-out event CIa may also include or be associated with a merchandise code for the merchandise identifiable by the exterior features of the merchandise taken by the buyer from the basket stand 102.

When a buyer's behavior of holding merchandise over the reading window 109 of the scanner 108 is detected from the camera image, the detection terminal 3 identifies a camera event corresponding to that behavior. Hereafter, this camera event type is called a scan behavior event CIb. The scan behavior event CIb may also include or be associated with a merchandise code for the merchandise as identified using exterior feature data of the merchandise held over the reading window 109.

When the detection terminal 3 detects a behavior of a buyer placing merchandise in a plastic bag or personal bag placed on the bagging table 103 in a camera image, it determines a camera event corresponding to that behavior. Hereafter, this camera event type is called a merchandise bagging event CIc. The merchandise bagging event CIc may also include a merchandise code for the merchandise specified by the buyer using data on exterior feature of the merchandise stored in a shopping bag or personal bag placed on the bagging stand 103.

When the detection terminal 3 detects that merchandise is stored on the bottom of a shopping cart placed near the basket stand 102 from the camera image, it determines a camera event corresponding to the behavior of storing merchandise in the bottom of the cart. Hereafter, this camera event is called as a cart-bottom merchandise storage event CId. The cart-bottom merchandise storage event CId may also include a merchandise code for the merchandise specified by the data on exterior feature of the merchandise stored in the bottom of the cart. In this case, when two or more items of merchandise are placed in the bottom of the cart, the merchandi se code for each item of merchandise is provided in the cart-bottom merchandise storage event CId.

It should be noted that the types of camera events determined by the detection terminal 3 are not limited to the four types described above: the merchandise take-out event CIa, the scan behavior event CIb, the merchandise bagging event CIc, and the cart-bottom merchandise storage event CId. The detection terminal 3 may determine another type of camera event from the camera image.

When some operation event occurs by the buyer (ACT21), the self-POS terminal 1 outputs a POS event showing the operation details to a corresponding detection terminal 3 (ACT22). For example, when the code symbol of the merchandise held over the reading window 109 of the scanner 108 is read, the self-POS terminal 1 outputs a POS event indicating the operation details. Hereafter, this POS event is called a registration event PIa. The registration event PIa includes a merchandise code specified from a code symbol read by the scanner 108.

For example, when merchandise is placed on the bagging stand 103 and the measured weight of the scale unit 122 changes, the self-POS terminal 1 outputs a POS event indicating the operation details. Hereafter, this POS event is called a weight event PIb. The weight event PIb includes measured weight after the change.

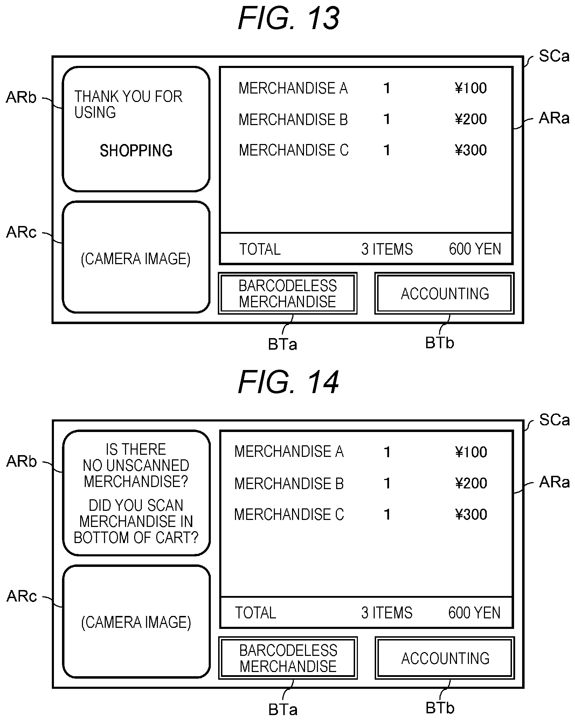

For example, when the [Accounting] touch button BTb displayed on the registration screen SCa (see FIG. 14) of the touch panel 105 is operated by touch, the self-POS terminal 1 outputs a POS event indicating the operation details. Hereafter, this POS event is called an accounting event PIc. When the buyer completes registering the purchased merchandise, touch the [Accounting] touch button BTb.

It should be noted that the types of POS events output from the self-POS terminal 1 are not limited to the three types: the registration event PIa; the weight event PIb; and the accounting event PIc described above. The self-POS terminal 1 may output another type of POS event in response to the buyer's operation.

The detection terminal 3 detects a buyer's reporting act based on the POS event output from the self-POS terminal 1 and the camera event determined based on the camera image of the camera 2 (ACT32). The detection terminal 3 detects reporting acts called as, for example, "omitted scan," "expensive merchandise error," "cart-bottom merchandise error," or "number of purchased items: large." Alternatively, the detection terminal 3 detects the buyer's reporting act based on the POS event output from the self-POS terminal 1 (ACT32). The detection terminal 3 detects a reporting act called as, for example, a "weight error." Thus, the detection terminal 3 detects the buyer's reporting act based on the POS event and the camera event. That is, the self-POS terminal 1 that outputs POS events and the camera 2 that outputs camera images used to determine camera events have functions as the output means for outputting information necessary to detect the buyer's act requiring a report on a transaction processing device. Note, since it is also possible to detect a buyer's reporting act based on only the POS event, in that case, the self-POS terminal 1 has a function as the output means. Further, since it is possible to detect a buyer's reporting act based on only camera events, in that case, the camera 2 has a function as the output means.

The detection terminal 3 determines whether the buyer's reporting act is detected (ACT33). When a reporting act is detected (YES in ACT33), the detection terminal 3 reports to the supervisor that the reporting act has occurred. Specifically, the detection terminal 3 outputs a reporting event for reporting that a reporting act has occurred, to the monitoring terminal 4 where the supervisor is the operator (ACT34).

Further, the detection terminal 3 updates the detection flag described in correlation with the reporting act ID of the reporting act in the report table 331 from "0" to "1" (ACT35). Note, when the detection flag is already "1," that state is maintained.

The detection terminal 3 searches the report table 331 and counts the number n of detection flags that have become "1" (ACT36). Then, the detection terminal 3 determines whether the number n of detection flags that have become "1" is greater than a predetermined threshold value N (ACT37). The threshold value N is a threshold value that serves as a criterion for whether to report reporting act to the self-POS terminal 1. In the present embodiment, the threshold value N is set to "2." When the number n of detection flags that have become "1" is equal to or greater than the threshold value N (YES in ACT37), the detection terminal 3 reports to the buyer that reporting act has occurred. Specifically, the detection terminal 3 outputs a reporting event for reporting the reporting act to the self-POS terminal 1 where the buyer is the operator (ACT38). The self-POS terminal 1 that has received the reporting event makes a report to the buyer by, for example, displaying information such as text or images showing the details of the reporting act on the touch panel 105 (ACT23). The self-POS terminal 1 may report the details of the reporting act to the buyer by voice.

Note, in the operation of ACT33 of the detection terminal 3, in a case where the reporting act is not detected (NO in ACT33), the detection terminal 3 skips the operations of ACT34 to ACT38. Similarly, in the operation of ACT37 of the detection terminal 3, in a case where the number n of detection flags that have become "1" is less than the threshold value N (NO in ACT37), the detection terminal 3 skips the operation of ACT38.

The detection terminal 3 repeatedly performs operations shown by ACT31 to ACT38 until the purchased merchandise for one transaction is registered on the self-POS terminal 1 and the transaction is settled. Thus, the detection terminal 3 detects reporting acts occurring in one transaction by type based on POS events output from the self-POS terminal 1 and camera events determined from images captured by the camera 2. Then, when the threshold value N or more types of reporting acts are detected, the detection terminal 3 outputs a reporting event to report that a plurality of types of reporting acts have been detected to the self-POS terminal 1 operated by the buyer who performs the reporting act. Every time a reporting act is detected, a reporting event for reporting that the reporting act has been detected is output to the monitoring terminal 4.

### Explanation of program of detection terminal

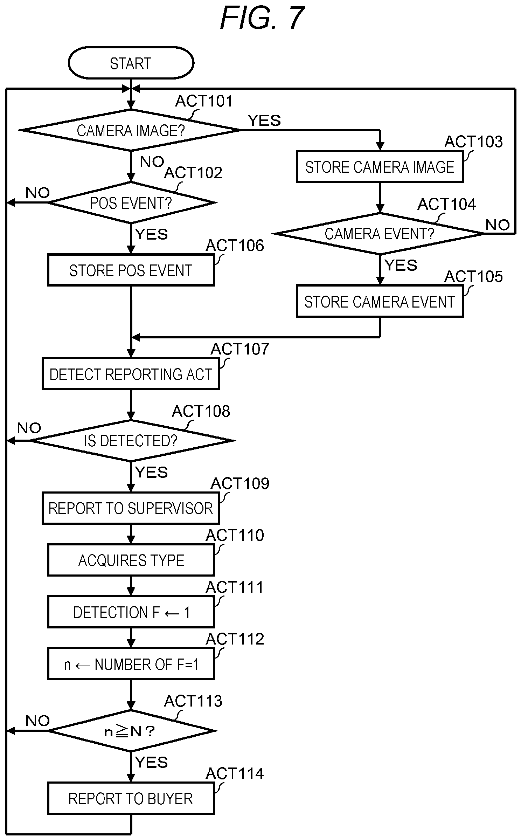

FIG. 7 is a flowchart of information processing executed by the processor 31 of the detection terminal 3. The processor 31 executes the information processing shown in the flowchart in FIG. 7 in accordance with an information processing program (software) stored in the main memory 32 or auxiliary storage device 33.

In other words, the processor 31 checks whether camera images have been acquired from the camera 2 matched to the detection terminal 3, as ACT101. If camera images are not yet acquired, the processor 31 advances to ACT102. The processor 31 now checks whether a POS event has been acquired from the self-POS terminal 1 matched to the detection terminal 3, as ACT102. If a new POS event has not been acquired, the processor 31 returns to ACT 101. In this manner, the processor 31 waits to acquire a camera image or a POS event in ACT 101 and ACT102.

When camera images are acquired in the standby state of ACT101 and ACT102, the processor 31 advances to ACT103. The processor 31 stores the camera image in the camera image storage unit 332, as ACT103. The processor 31 then analyzes the camera image stored in the camera image storage unit 332 by the AI image analysis engine to check whether a camera event can be identified (determined), as ACT104. When a camera event is not identified, the processor 31 returns to the standby state of ACT101 and ACT102.

When a camera event is determined in ACT104, the processor 31 advances to ACT105. The processor 31 stores the camera event in the event log storage unit 333, as ACT105.

When a POS event is acquired in the standby state of ACT101 and ACT102, the processor 31 advances to ACT106. The processor 31 stores the POS event in the event log storage unit 333, as ACT106.

Whenever a camera event or a POS event is stored in the event log storage unit 333 in ACT105 or ACT106, the processor 31 advances to ACT107. The processor 31 detects reporting act types set in the report table 331 based on the camera event(s) and POS event(s) stored in the event log storage unit 333, as ACT107. The detection operation for different reporting acts will be explained below.

The processor 31 checks whether a reporting act is detected, as ACT108. When a reporting act is not detected, the processor 31 returns to the standby state of ACT101 and ACT102.

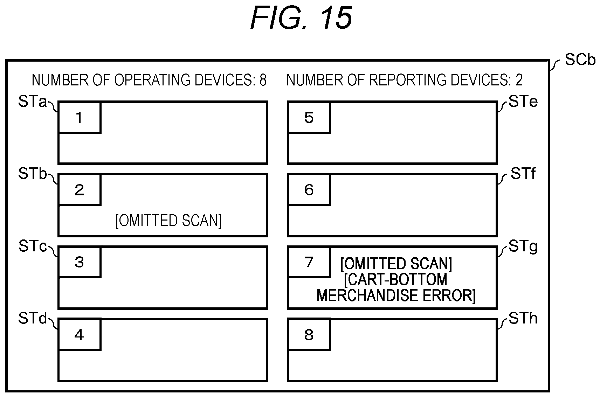

When a reporting act of any type is detected in ACT108, the processor 31 advances to ACT109. The processor 31 makes a report to the supervisor, as ACT109. In other words, the processor 31 transmits, to the monitoring terminal 4, a reporting event for reporting that a reporting act was detected. The reporting event includes information indicating the detected reporting act type. On the monitoring terminal 4, information for reporting to the supervisor that a reporting act has been detected on the detection terminal 3 is displayed on the display (see FIG. 15).

The processor 31 then advances to ACT110. The processor 31 acquires the type of reporting act detected, as ACT110. Then, the processor 31 updates the detection flag described in the report table 331 from "0" to "1" in correlation with the corresponding type of reporting act ID, as ACT111. Note, when the detection flag is already "1," the processor 31 maintains that state.

The processor 31 counts the number n of detection flags that have become "1", as ACT112. Then, the processor 31 determines whether the number n of detection flags that has become "1" is equal to or greater than a predetermined threshold value N (N = 2 in the present embodiment), as ACT113. When the number n of detection flags that has become "1" is less than the threshold value N, the processor 31 returns to the standby state of ACT101 and ACT102.

On the other hand, when the number n of detection flags that has become "1" is equal to or greater than the threshold value N, the processor 31 advances to ACT114. The processor 31 makes a report to the buyer, as ACT114. In other words, the processor 31 transmits a reporting event for reporting that a reporting act has been detected to a corresponding self-POS terminal 1. The reporting event includes information showing reporting act items of two or more types for reporting act IDs correlated to two or more types of detection flags have each become "1". In the self-POS terminal 1, information for reporting to the buyer that reporting acts of two or more types have been detected is displayed on a part of the screen of the touch panel 105 (see FIG. 14). The processor 31 then returns to the standby state of ACT101 and ACT102.

Here, the processor 31 implements the functions of the detection means 311 by the process of ACT101 to ACT108. The processor 31 implements the functions of the acquisition means 312 by the process of ACT110 and ACT111. The processor 31 implements the functions of the reporting means 313 by the process of ACT112 to ACT114. The processor 31 implements the functions of the second reporting means 314 by the process of ACT109.

### Explanation of types of reporting acts and detection operations

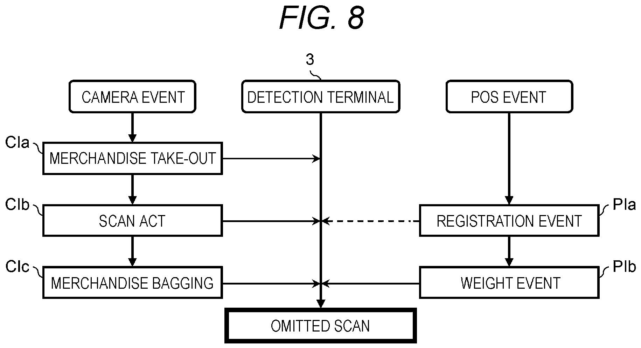

FIG. 8 is a schematic diagram showing the reporting act detection operation of the reporting act item "omitted scan." The reporting act item "omitted scan" is an act of not scanning the bar code of the merchandise that the buyer has taken out of the basket stand 102 and placed in a plastic bag or personal bag on the bagging stand 1031. For example, the act when the purchased merchandise is placed in a bag without the barcode thereof being read because the buyer holds the merchandise over the reading window 109 of the scanner 108 but does not hold the merchandise correctly corresponds to the reporting act item "omitted scan."

For such a buyer act, the event log storage unit 333 stores a merchandise take-out event CIa for a camera event, then stores a scan act event CIb, and then stores a merchandise bagging event CIc. For POS events, only weight event PIb is stored, and registration event PIa is not stored.

When a merchandise take-out event CIa, a scan behavior event CIb, and a merchandise bagging event CIc are stored in this order, the weight event PIb is stored, but the registration event PIa is not stored, the detection terminal 3 detects that there has been the reporting act item "omitted scan." Note, even when the buyer places the purchased merchandise in a bag without holding the purchased merchandise over the reading window 109, this case corresponds to the reporting act item "omitted scan." In other words, when a merchandise take-out event CIa and a merchandise bagging event CIc are stored, the weight event PIb is stored, but the registration event PIa and the scan behavior event CIb are not stored, the detection terminal 3 detects that there has been the reporting act item "omitted scan."

When the reporting act item "omitted scan" is detected, the detection flag Fa becomes "1." Then, when the number n of detection flags that have become "1" reaches the threshold value N or higher, the detection terminal 3 makes a report to the buyer. In this case, the reporting event transmitted to the self-POS terminal 1 includes information indicating the reporting act item "omitted scan" and information indicating the reporting act item of the reporting act ID correlated with another detection flag that has become "1".

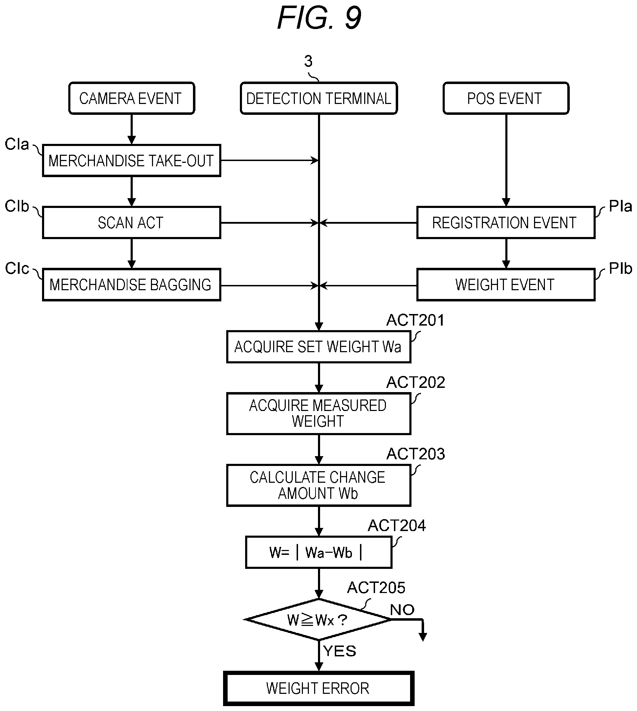

FIG. 9 is a schematic diagram showing the reporting act detection operation for a reporting act item "weight error". The reporting act item "weight error" is an act where merchandise is taken out of the basket stand 102 and then placed in a plastic bag or personal bag on the bagging stand 103 but the detected weight change does not match the merchandise specified by the barcode scanned by the scanner 108 at the self-POS terminal 1. For example, act of a buyer taking two items from a shopping basket, scanning only one item of these items, but placing the two items in a bag corresponds to a reporting act item "weight error." For example, for merchandise that can be sold in packs of identical items, a bar code corresponding to the pack selling price may be printed on the pack with a bar code corresponding to a single item price being also printed on each individual item in the pack. An act of taking a pack from the basket stand 102, but scanning a barcode corresponding to the single item price instead of a bar code corresponding to the pack selling price, and then placing the pack in a bag also corresponds to a reporting act item "weight error."

For such a buyer act, the event log storage unit 333 stores a merchandise take-out event CIa (as a camera event), then stores a scan act event CIb, and then stores a merchandise bagging event CIc. For POS events, registration events PIa are stored, and then weight events are also stored.

When the merchandise take-out event CIa, the scan behavior event CIb, and the merchandise bagging event CIc are stored in order, and the registration event PIa and the weight event PIb are stored in this order, the detection terminal 3 acquires the set weight Wa of the merchandise specified by the merchandise code provided in the registration event PIa (ACT201). The detection terminal 3 also acquires a measured weight provided by the weight event (ACT202). Then, the detection terminal 3 calculates the change amount Wb between the measured weight provided at the previous (most recent) weight event and the measured weight provided by the current weight event (ACT203).

The detection terminal 3 calculates the difference W between the set weight Wa and the change amount Wb (ACT204). Then, the detection terminal 3 checks whether the difference W is equal to or greater than the determination value Wx (ACT205). The determination value Wx can be any value exceeding an allowable range ± α for the set weight Wa. When the weight of the merchandise to which the same bar code is attached is uniform, the determination value Wx will be "0" or a value close to "0." However, there are types of merchandise for which the weight is not uniform item to item for merchandise with the same barcode, such as vegetables, fruits, side dishes, or the like An appropriate determination value Wx (Wx > α) exceeding the allowable range ± α of the set weight Wa may be set for such merchandise.

When the difference W is less than the determination value Wx (NO in ACT205), the detection terminal 3 does not detect the reporting act item "weight error". In contrast to this, when the difference W is equal to or greater than the determination value Wx (YES in ACT205), the detection terminal 3 detects that there has been a reporting act item "weight error".

After the reporting act item "weight error" is detected, the detection flag Fb becomes "1." Then, when the number n of detection flags that have become "1" reaches or exceeds the threshold value N, the detection terminal 3 makes a report to the buyer. In such a case, the reporting event transmitted to the self-POS terminal 1 includes information indicating the reporting act item "weight error" and information indicating any reporting act item of a reporting act ID correlated to another detection flag that has become "1".

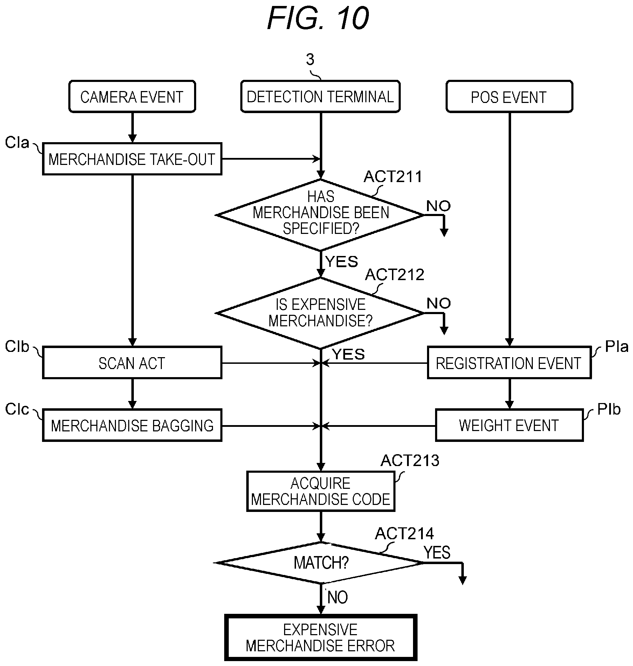

FIG. 10 is a schematic diagram showing the reporting act detection operation of a reporting act item "expensive merchandise error". The reporting act item "expensive merchandise error" occurs whenever the merchandise taken from the basket stand 102 and placed in a shopping bag or personal bag on the bagging stand 103 is considered expensive merchandise, but the merchandise specified by the barcode scanned by the scanner 108 at the self-POS terminal 1 is not for the expensive merchandise. For example, any merchandise with a unit price at the threshold amount or more can be designated in advance as expensive merchandise. An act of a buyer taking out expensive merchandise and other items of merchandise from a shopping basket, scanning only the other items of merchandise and placing the scanned merchandise in a bag, while hiding the expensive merchandise without placing it in a bag corresponds to a reporting act item "expensive merchandise error." Alternatively, an act when a buyer holds expensive merchandise over the reading window 109 of the scanner 108, but does not correctly hold the barcode to be readable, and the barcode is thus not read though the merchandise is placed in a bag also corresponds to a reporting act item "expensive merchandise error." It should be noted that the latter act is also equivalent to the reporting act item "omitted scan."

For such a buyer act, the event log storage unit 333 stores a merchandise take-out event CIa for a camera event, then stores a scan act event CIb, and then stores a merchandise bagging event CIc. For POS events, registration events PIa are stored, and then weight events are stored.

The detection terminal 3 checks whether the merchandise has been specified, that is, whether the merchandise code is provided in the merchandise take-out event CIa from the camera image of an act of the buyer taking out the merchandise from the basket stand 102 (ACT211). When a merchandise code is provided (YES in ACT211), the detection terminal 3 determines whether the merchandise specified by the merchandise code is merchandise previously set as expensive merchandise (ACT212). When the merchandise code is not provided in the merchandise take-out event CIa (NO in ACT211), or when the merchandise specified by the merchandise code is not expensive merchandise (NO in ACT212), the detection terminal 3 does not detect the reporting act item "expensive merchandise error".

In contrast to this, when the merchandise specified by the merchandise code is expensive merchandise (YES in ACT212), the detection terminal 3 continues to detect the reporting act item "expensive merchandise error". The detection terminal 3 acquires a merchandise code from the registration event PIa (ACT213). The detection terminal 3 determines whether the merchandise code matches the merchandise code of the expensive merchandise (ACT214). When the merchandise codes match (YES in ACT214), the detection terminal 3 does not detect the reporting act item "expensive merchandise error". In contrast to this, when the merchandise codes do not match (NO in ACT214), the detection terminal 3 detects that there has been a reporting act item "expensive merchandise error".

When the reporting act item "expensive merchandise error" is detected, the detection flag Fc becomes "1." Then, when the number n of detection flags that have become "1" becomes the threshold value N or higher, the detection terminal 3 makes a report to the buyer. In this case, the reporting event transmitted to the self-POS terminal 1 includes information indicating the reporting act item "expensive merchandise error" and information indicating the reporting act item of the reporting act ID correlated with another detection flag that has become "1".

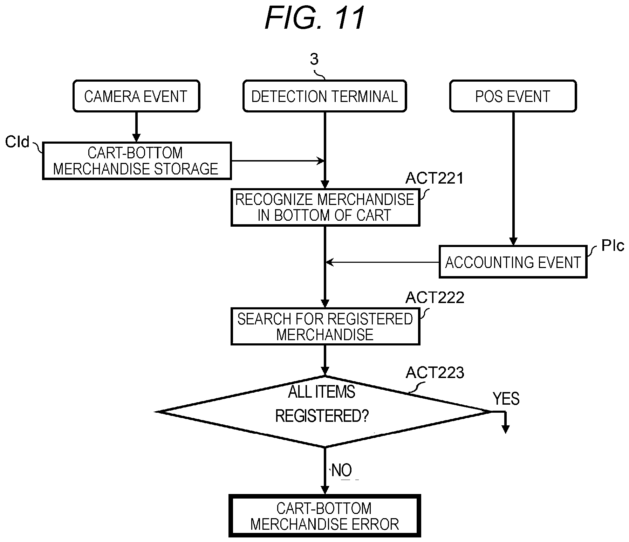

FIG. 11 is a schematic diagram showing the reporting act detection operation of a reporting act item "cart-bottom merchandise error". The reporting act item "cart-bottom merchandise error" is when a buyer completes (finalizes) registration of merchandise without scanning the merchandise stored at the bottom of the shopping cart.

For such an act, a cart-bottom merchandise storage event CId for a camera event is stored in the event log storage unit 333. For POS events, an accounting event PIc is stored. When the cart-bottom merchandise storage event CId is acquired, the detection terminal 3 attempts to recognize the merchandise specified in the cart-bottom merchandise storage event CId (ACT221). That is, the detection terminal 3 acquires a merchandise code included in the cart-bottom merchandise storage event Cid notice. If merchandise codes of two or more items are included in the cart-bottom merchandise storage event CId, then each merchandise code is acquired.

Then, once the accounting event PIc is acquired, the detection terminal 3 searches the purchased merchandise registered in the transaction file 17 of the self-POS terminal 1 (ACT222). Then, the detection terminal 3 checks whether the merchandise stored in the bottom of the cart has already been registered in the transaction file 17 (ACT223). That is, the detection terminal 3 checks whether purchased merchandise data for the merchandise code(s) included in the cart-bottom merchandise storage event CId are registered in the transaction file 17. When all items of merchandise that were stored in the bottom of the cart are registered in the transaction file 17 (YES in ACT223), the detection terminal 3 does not detect the reporting act item "cart-bottom merchandise error". When even one item of the merchandise stored in the bottom of the cart is still not registered in the transaction file 17 (NO in ACT223), the detection terminal 3 detects that there has been a reporting act of the reporting act item "cart-bottom merchandise error."

Note, in general, merchandise stored at the bottom of the shopping cart is often large merchandise that do not fit in the shopping basket. Therefore, when a merchandise code cannot be acquired from the cart-bottom merchandise storage event CId in ACT221, the detection terminal 3 searches whether merchandise classified as large merchandise in ACT222 is registered in the transaction file 17. Further, when merchandise classified as large merchandise is not registered in the transaction file 17 (YES in ACT223), the detection terminal 3 may detect that there has been the reporting act item "cart-bottom merchandise error."

When the reporting act item "cart-bottom merchandise error" is detected, the detection flag Fc becomes "1." Then, when the number n of detection flags that have become "1" becomes the threshold value N or higher, the detection terminal 3 makes a report to the buyer. In this case, the reporting event transmitted to the self-POS terminal 1 includes information indicating the reporting act item "cart-bottom merchandise error" and information indicating the reporting act item of the reporting act ID correlated with another detection flag that has become "1."

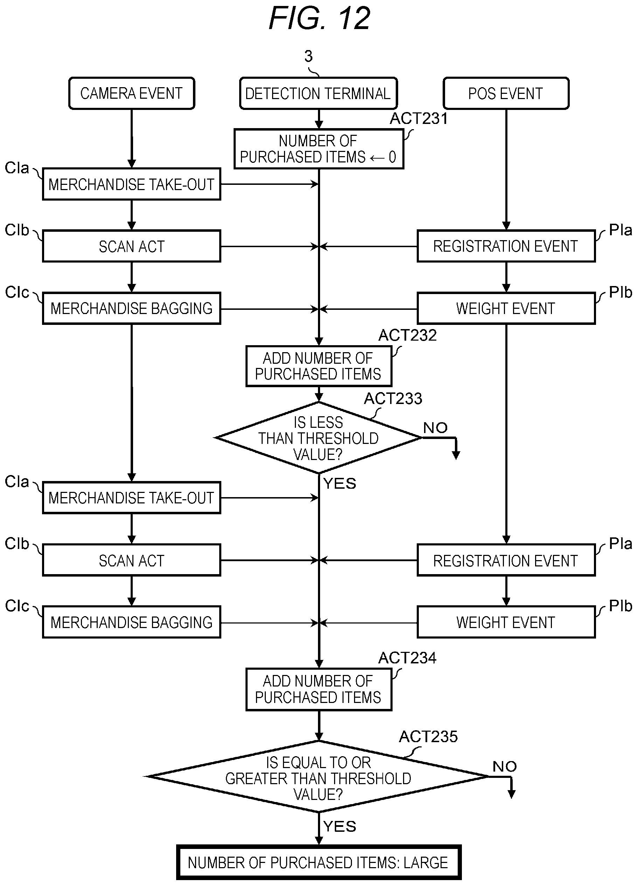

FIG. 12 is a schematic diagram showing the reporting act detection operation of a reporting act item "number of purchased items: large". The reporting act item "number of purchased items: large" is an act where a buyer purchases a large amount of purchased merchandise in one transaction. For example, when a buyer purchases ten or more items, the detection terminal 3 reports that the reporting act item "number of purchased items: large" has been detected to the monitoring terminal 4 and the self-POS terminal 1.

In response to such an act, the event log storage unit 333 repeatedly stores the merchandise take-out event CIa, the scan behavior event CIb, and the merchandise bagging event CIc for camera events. For POS events, registration events PIa and weight events are repeatedly stored.

The detection terminal 3 stores "0" as the default number of purchased items (ACT231). Subsequently, when in the event log storage unit 333, the merchandise take-out event CIa, the scan behavior event CIb, and the merchandise bagging event CIc of camera events are stored, and the registration event PIa and weight event PIb of POS event are stored, the detection terminal 3 adds only "1" to the number of purchased items (ACT232).

The detection terminal 3 checks whether the number of purchased items is larger than the reporting threshold value (ACT233). The reporting threshold value is the value of the number of purchased items for determining that the reporting act item "number of purchased items: large" has been detected. For example, when a buyer purchases ten or more items, assuming that the reporting act item "number of purchased items: large" has been detected, the reporting threshold value is "10." When the number of purchased items is below the threshold value (YES in ACT233), the detection terminal 3 continues to detect the reporting act item "number of purchased items: large".

Each time the merchandi se take-out event CIa, the scan behavior event CIb, and the merchandise bagging event CIc camera events are stored in the event log storage unit 333 with the registration event PIa and weight event POS events are also stored, the detection terminal 3 adds "1" to the number of purchased items (ACT234), and repeats the process of comparing the number with the reporting threshold value (ACT235). As a result, when the number of purchased items is equal to or greater than the reporting threshold value (YES in ACT23 5), the detection terminal 3 detects that there has been a reporting act of the reporting act item "number of purchased items: large".

When the reporting act item "number of purchased items: large" is detected, the detection flag Fc becomes "1." Then, when the number n of detection flags that have become "1" becomes the threshold value N or higher, the detection terminal 3 makes a report to the buyer. In this case, the reporting event transmitted to the self-POS terminal 1 includes information indicating the reporting act item "number of purchased items: large" and information indicating the reporting act item of the reporting act ID correlated with another detection flag that has become "1".

### Explanation of report example

FIG. 13 is an example of a registration screen SCa displayed on the touch panel 105 of the self-POS terminal 1. The registration screen SCa is a screen used to register purchased merchandise. The registration screen SC is generated by the processor 11 of the self-POS terminal 1.

As shown in FIG. 13, the registration screen SCa includes a touch button BTa for "merchandise without barcode" and a touch button BTb for "Accounting". The touch button BTa of [merchandise without barcode] is used when registering merchandise without a barcode, such as fresh food. In response to the touch of this touch button BTa, the self-POS terminal 1 displays a touch button corresponding to the merchandise to which the code symbol is not attached, the so-called merchandise button, and the buyer can register the merchandise by touching the merchandise button corresponding to the purchased merchandise. The "Accounting" touch button BTb is used when a buyer who has completed registration of purchased merchandise declares accounting for a transaction.

The registration screen SCa is divided into a registration list area ARa, a text area ARb, and a camera image area ARc. The registration list area ARa is an area for displaying a list of merchandise names, the number of purchased items, and purchase amounts of purchased merchandi se registered by the buyer. The text area ARb is an area for displaying text such as guidance and messages to buyers. The camera image area ARc is an area for displaying current camera images captured by the corresponding camera 2.

In the present embodiment, when a reporting event is received from the detection terminal 3, a text showing the details of the reporting act is displayed in the text area ARb. FIG. 14 is an example of a registration screen SCa of the self-POS terminal 1 that has received a reporting event when two types of reporting acts of the reporting act item "omitted scan" and the reporting act item "cart-bottom merchandise error" are detected. As shown in FIG. 14, text showing the reporting act for the reporting act item "omitted scan", for example, "is there no unscanned merchandise?", text showing the reporting act for the reporting act item "cart-bottom merchandise error", for example "did you scan the merchandise in the bottom of the cart?" are displayed in the text area ARb. Therefore, buyers who intentionally commit fraudulent acts that result in omitted scan or not scanning the merchandise in the bottom of the cart are made aware that their fraudulent acts are known on the store side, leading to prevention of fraudulent acts.

FIG. 15 is an example of a monitoring screen SCb displayed on the display of the monitoring terminal 4. As shown in FIG. 15, the monitoring screen SCb is divided into monitoring areas STa to STh for each cash register system RS. In the monitoring area STa to STh, the state of the self POS terminal 1 of the corresponding cash register system RS is displayed. Further, when a reporting event is received from the detection terminal 3 of the corresponding cash register system RS, text showing the details of the reporting act is displayed in the monitoring areas STa to STh.

FIG. 15 is a monitoring screen SCb when the reporting act item "omitted scan" is detected in the detection terminal 3 of the cash register system RS identified by the cash register number "2", and a reporting act of the reporting act item "omitted scan" and a reporting act of the reporting act item "cart-bottom merchandise error" are detected in the detection terminal 3 of a cash register system RS identified by the cash register number "7". When the reporting act detected by the detection terminal 3 of the cash register system RS is 1 type, no report is made to the self-POS terminal 1. However, when two or more types of reporting acts are detected, a report is also made to the self-POS terminal 1. Therefore, in the monitoring terminal 4, a text of the reporting act for the cash register system RS in which only one type of reporting act has been detected, for example, [omitted scan], and texts of the reporting act for the cash register system RS in which only two or more types of reporting acts have been detected, for example, [omitted scan] and [cart-bottom merchandise error] are made identifiable by the supervisor by changing, for example, the text colors, fonts, or the like.

### Effects of first embodiment

As detailed above, according to the first embodiment, the detection terminal 3 stores a detection flag for each reporting act item identified by a reporting act ID. Then, in one transaction, when reporting acts of at least two or more types of reporting act items are detected and each detection flag becomes "1," the detection terminal 3 reports to the corresponding self-POS terminal 1 that the reporting acts of the two or more types of reporting act items have been detected. Therefore, since the frequency of reporting is reduced compared to when reporting is made every time fraud in reporting act items is detected, the risk of false detection reporting to the buyer can be reduced. When two or more types of reporting acts are detected, a report is made to the corresponding self-POS terminal 1, which makes it possible to prevent or reduce fraudulent acts efficiently and effectively.

Further, the detection terminal 3 makes a report to the monitoring terminal 4 every time a reporting act identified by the reporting act item is detected. In response to this report, the monitoring terminal 4 displays on a display that a reporting act identified by the reporting act item has been detected. Therefore, since supervisors can recognize in real time that a reporting act has occurred, it is even more effective in preventing or reducing fraudulent acts. It should be noted that the reporting destination may be the self-POS terminal 1. Alternatively, it may be a monitor device, or the like, other than the monitoring terminal.

### Second Embodiment

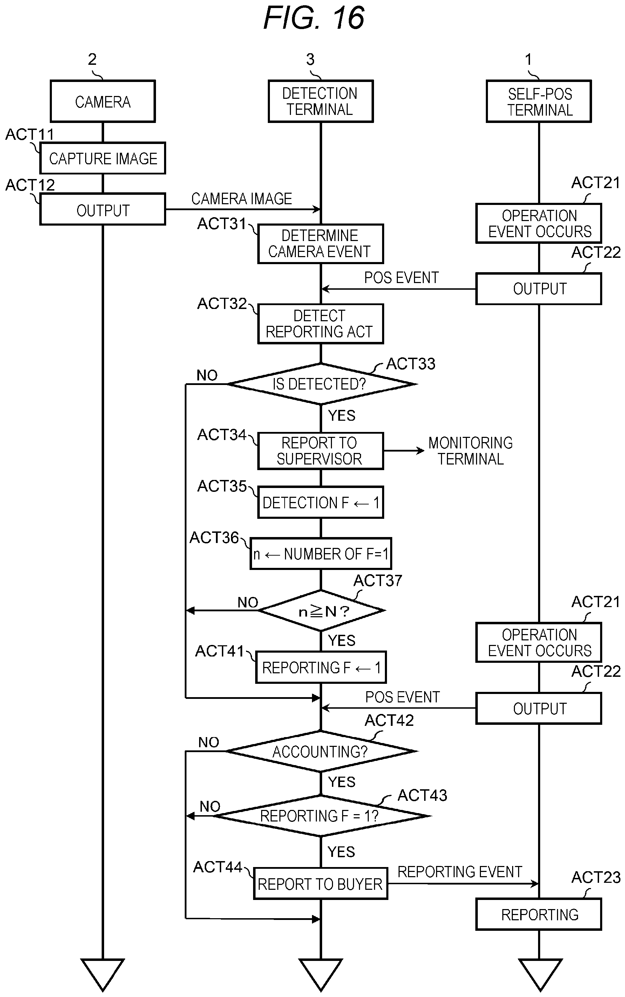

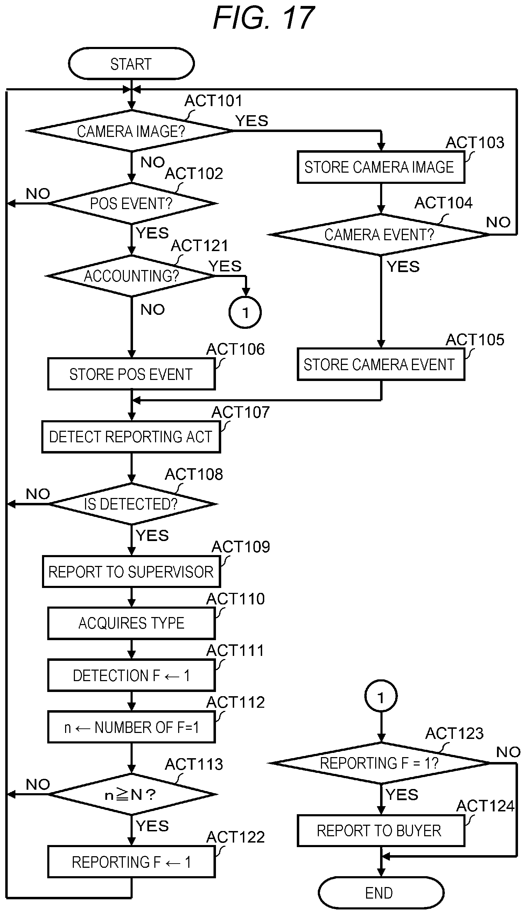

Next, a second embodiment of the detection terminal 3, which functions as an information processing device, is explained using FIG. 16 and FIG. 17.

FIG. 16 is a series of sequence diagram illustrating operations related to detection and reporting of reporting acts in the detection terminal 3 of the second embodiment along with the operations of the camera 2 and the self-POS terminal 1 in the same cash register system RS. The same reference signs and numerals are attached to the parts common to the sequence diagram of the first embodiment shown in FIG. 6.

When comparing FIG. 6 with FIG. 16,, the processes after determining that the number of occurrences is equal to or greater than the reporting threshold value in ACT37 differs in the second embodiment from the first embodiment. That is, in the second embodiment, when the number n of detection flags that have become "1" is equal to or greater than the threshold value N (YES in ACT37), the detection terminal 3 sets the report flag (reporting F) to "1"(ACT41). At this time, the detection terminal 3 does not make a report to the buyer.

When receiving an accounting event as a POS event from the self-POS terminal 1 (YES in ACT42), the detection terminal 3 determines whether the report flag is "1" (ACT43). When the report flag is "1" (YES in ACT43), the detection terminal 3 makes a report to the buyer (ACT44).

For example, since the detection flag Fa correlated with the reporting act ID of the reporting act item "omitted scan" and the detection flag Fd correlated with the reporting act ID of the reporting act item "cart-bottom merchandise error" are both "1," when the report flag becomes "1" in ACT41, the buyer is reported that the reporting acts of the reporting act item "omitted scan" and "cart-bottom merchandise error" have been detected.

FIG. 17 is a flowchart of information processing executed by the processor 31 of the detection terminal 3. The same reference signs and numerals are attached to those parts common to the flowchart for the first embodiment shown in FIG. 7.

As seen when comparing FIG. 7 with FIG. 17, in the second embodiment, the processes after acquiring a POS event in the standby state of ACT101 and ACT102 is different from the first embodiment. More particularly, here the processor 31 checks whether the POS event is an accounting event, as ACT121. That is, the processor 31 checks for the accounting event by detecting whether or not the accounting button BTb on the registration screen Sca in FIG. 14 has been pressed. When it is not an accounting event, the processor 31 advances to ACT106. The processor 31 then executes the process of ACT 106 to ACT 113 in the same way as described in the first embodiment. When the number n of detection flags that have become "1" is equal to or greater than the threshold value N in ACT113, the processor 31 advances to ACT122. The processor 31 sets the report flag to "1", as ACT122. The report flag is 1-bit data for identifying whether or not to report a reporting act detected by the detection terminal 3. The report flag is a value "0" indicating that no report is made in the default state. When the number n of detection flags that have become "1" is equal to or greater than the threshold value N in ACT 113, it becomes a value "1" indicating that a report is to be made. The processor 31 with the report flag set to "1" returns to the standby state of ACT101 and ACT102.

When an accounting event is acquired in ACT121, the processor 31 advances to ACT123. The processor 31 checks whether the report flag is set to "1", as ACT123. As a result, if the report flag is "0," the processor 31 terminates the information processing shown in the flowchart shown in FIG. 17.

In contrast to this, if the report flag is set to "1," the processor 31 advances to ACT124. The processor 31 makes a report to the buyer, as ACT124. In other words, the processor 31 transmits a reporting event for reporting that two or more types of reporting act items have detection flags that are "1" have been detected to the associated self-POS terminal 1. With the above, the processor 31 ends the information processing of the procedures shown in the flowchart of FIG. 17.

Thus, in the second embodiment, the detection terminal 3 updates the report flag from the default "0" to "1", when reporting acts of at least two types of reporting act items are detected in one transaction and each detection flag becomes "1." Then, at a timing when an accounting event is received from the corresponding self-POS terminal 1, it is reported that two or more types of reporting act items have been detected if report flag is "1". Therefore, compared to the first embodiment where reporting is performed whenever at least 2 types of reporting act items have been detected, the frequency of event/act reporting is limited to only once, so that the risk of false detection reporting to the buyer can be further reduced. Further, since a report is made after only after merchandise registration is completed, it does not interfere with merchandise registration operations of customers unfamiliar with the self-POS terminal 1. Thus, the time required for merchandise registration can be shortened. The detection terminal 3 may still make a report to the monitoring terminal 4 every time a reporting act identified by the reporting act item is detected. Therefore, prevention or reduction of fraudulent acts is effective.

### Third Embodiment

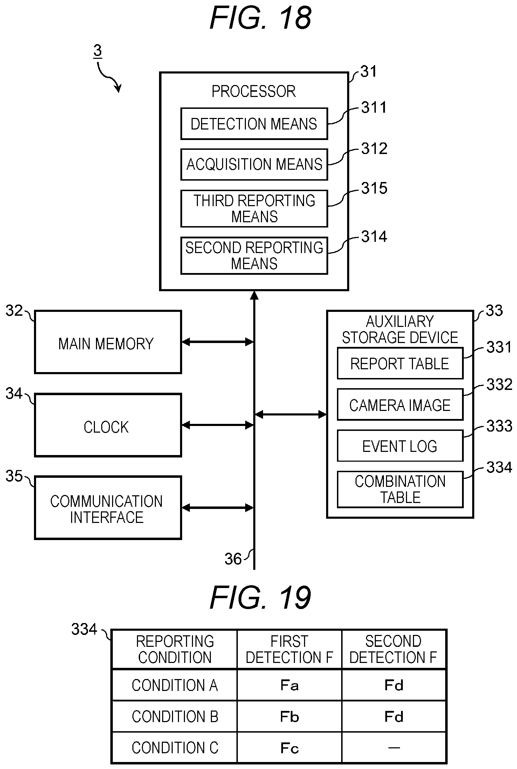

Next, a third embodiment of the detection terminal 3, which functions as an information processing device, is explained using FIG. 18 to FIG. 20.

FIG. 18 is a block diagram of the detection terminal 3 in the third embodiment. The same reference signs and numerals are attached to the parts common to the block diagram of the detection terminal 3 of the first embodiment shown in FIG. 4.

As seen when comparing FIG. 4 with FIG. 18, in the third embodiment, an area of a combination table 334 is added to the storage area of the auxiliary storage device 33. As shown in FIG. 19, the combination table 334 is a data table in which a first detection flag (first detection F) and a second detection flag (second detection F) are set in correlation with different reporting conditions (condition A, condition B, condition C, ...).

Here, the number of reporting conditions may be any value. In some examples, only one type of condition may be set in the combination table 334 or four or more types of conditions may be set in the combination table 334. Further, a combination of a first detection flag and a second detection flag corresponding to one condition is also optional in some examples. For example, only the first detection flag may be set, and the second detection flag may not be set.

Incidentally, in FIG. 19, in correlation with the reporting condition A, the detection flag Fa of the reporting act item "omitted scan" is set as the first detection flag, and the detection flag Fd of the reporting act item "cart-bottom merchandise error" is set as the second detection flag. Further, in correlation with the reporting condition B, the detection flag Fb of the reporting act item "weight error" is set as the first detection flag, and the detection flag Fd of the reporting act item "cart-bottom merchandise error" is set as the second detection flag. With respect to the reporting condition C, only the detection flag Fc of the reporting act item "expensive merchandise error" is set as the first detection flag, and the second detection flag is not set.

The processor 31 of the detection terminal 3 equipped with such a combination table 334 has a function as a third reporting means 315 in addition to the detection means 311, the acquisition means 312, and the second reporting means 134, as shown in FIG. 18. The third reporting means 315 has a function of making a report, when a combination of the types acquired by the acquisition means 312 satisfies a predetermined condition, in one transaction. That is, when a combination of the types acquired by the acquisition means 312 satisfies a combination of the first detection flag and the second detection flag set in the combination table 334, the third reporting means 315 makes a report to the self-POS terminal 1.

Specifically, in one transaction, when the reporting act item "omitted scan" and the reporting act item "cart-bottom merchandise error" are detected, a condition A is satisfied. Therefore, the third reporting means 315 makes a report to the self-POS terminal 1. Similarly, when the reporting act item "weight error" and the reporting act item "cart-bottom merchandise error" are detected in the same transaction, a condition B is satisfied. Therefore, the third reporting means 315 makes a report to the self-POS terminal 1. In one transaction, if the reporting act item "expensive merchandise error" is detected, then a condition C is satisfied. Therefore, the third reporting means 315 makes a report to the self-POS terminal 1.

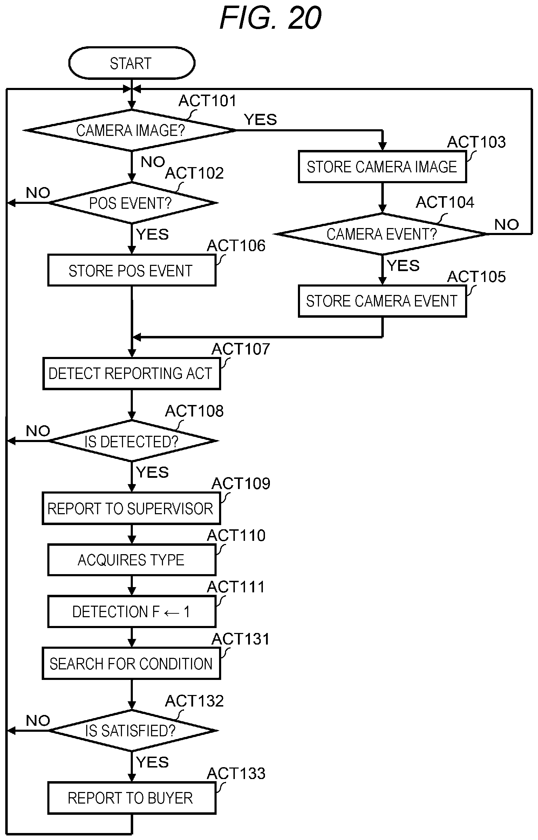

FIG. 20 is a flowchart of information processing executed by the processor 31 of the detection terminal 3 in the third embodiment. The same reference signs and numerals are attached to the parts common to the flowchart of the first embodiment shown in FIG. 7.

As seen when comparing FIG. 7 with FIG. 20, the third embodiment differs from the first embodiment in processes after the detection flag of the detected reporting act item is updated to "1" in ACT111. That is, when the detection flag of the detected reporting act item is updated to "1" in ACT111, the processor 31 advances to ACT131. As ACT131, the processor 31 searches the report conditions set in the combination table 334 based on the detection flags in the report table 331. Specifically, the processor 31 checks the first detection flag and the second detection flag for each reporting condition. For reporting conditions (for example, condition C) for which the second detection flag is not set, only the first detection flag is checked.

The processor 31 checks whether the conditions have been satisfied as ACT132. When both the first detection flag and the second detection flag are "1," the processor 31 determines that the condition has been satisfied. For reporting conditions for which the second detection flag is not set, in a case where the first detection flag is set to "1," it is determined that the condition has been satisfied. When the condition is not satisfied, the processor 31 returns to the standby state of ACT101 and ACT102.

When a condition is satisfied, the processor 31 advances to ACT133. The processor 31 makes a report to the buyer as ACT133. In other words, the processor 31 transmits a reporting event for reporting that a reporting act has been detected to a corresponding self-POS terminal 1. The reporting event includes information indicating the reporting act item for each reporting act ID correlated with the first detection flag and the second detection flag of the reporting condition of which condition has been satisfied, respectively. When the condition is satisfied in only the first detection flag, information indicating the reporting act item of the reporting act ID correlated with the first detection flag is included in the reporting event. The processor 31 then returns to the standby state of ACT101 and ACT 102.

Here, the processor 31 implements the functions of the third reporting means 315 by the process of ACT131 to ACT133.

In the third embodiment, in a transaction, in a case where a combination of reporting act items for which the reporting acts have been detected satisfies the conditions relating to a combination of the first detection flag and the second detection flag set in the combination table 334, the detection terminal 3 makes a reports to the corresponding self-POS terminal 1. Therefore, even in the third embodiment, since the frequency of reporting is reduced compared to when reporting is made every time fraud (a reportable act item) is detected, the risk of false detection reporting to the buyer can be reduced.

Further, in the third embodiment, it is possible to perform an operation in which only the first detection flag is set in the combination table 334 and the second detection flag is not set. Then, when such an operation is adopted, the detection terminal 3 makes a report to the corresponding self-POS terminal 1 when detecting the reporting act item corresponding to the first detection flag. Therefore, when a reporting act causing serious damage to a store, such as an "expensive merchandise error," is detected, it can be set to be reported even if no other reporting act has been detected. As a result, fraudulent acts causing serious damage to stores can be reliably reduced.

It should be noted that even in the third embodiment, as in the second embodiment, a report may be made to the self-POS terminal 1 in response to the accounting instructions when reporting conditions have been satisfied.

### Other Embodiments

The first embodiment illustrates the case where the reporting means 313 makes a report when two or more types of detection flags become "1" in the same transaction. However, the report threshold may be when two types of detection flags become "1", or when three or more types of detection flags become "1." That is, the threshold value N, which serves as a criterion for determining whether to report the reporting act to the self-POS terminal 1, may be any value of "3" or higher.

In the third embodiment, a report is made if the combination of detection flags that have become "1" matches a combination of conditions set in the combination table 334. For example, a report may be made when reporting acts corresponding to the first detection flag and the second detection flag have each been detected more than a set number of threshold times.

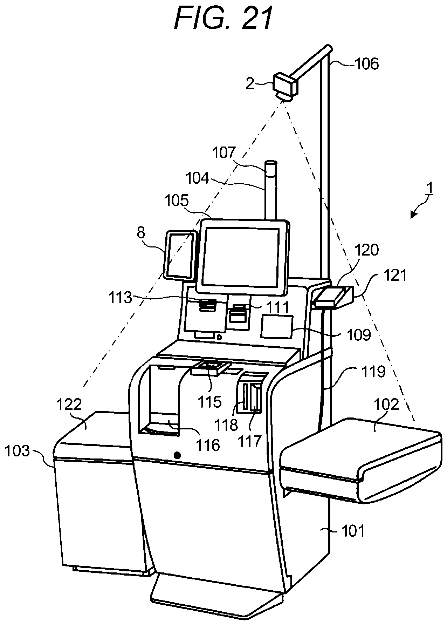

In an embodiment, the self-POS terminal 1 uses a part of the registration screen SCa as the text area ARb and the camera image area ARc. As shown in FIG. 21, a buyer display 8 can be provided on or at the self-POS terminal 1. For example, the buyer display 8 is provided next to the left side of the touch panel 105 that displays a registration screen SC, or the like. It should be noted that the position of the buyer display 8 is not limited to the position shown in FIG. 21. Any position where the buyer can view and check buy display 8 may be adopted.

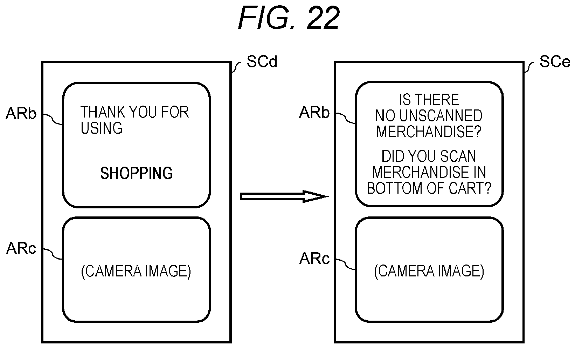

As shown in FIG. 22, the self-POS terminal 1 divides the screen SCd of the buyer display 8 into the text area ARb and the camera image area ARc. Then, as shown on the screen SCe in FIG. 22, when a reporting event is received from the detection terminal 3, the reporting act items specified by the reporting event, for example, text "are there any unscanned merchandise?" for the reporting act item "omitted scan" and text for the reporting act item "cart-bottom merchandise error", for example, "did you scan the merchandise in the bottom of the cart" are displayed in the text area ARb. By providing the buyer display 8 on the self-POS terminal 1 in this way, the buyer can more easily recognize the report. Further, the registration screen SCa of the touch panel 105 can have a larger region for registration list area ARa. In the above embodiments, the detection terminal 3 is illustrated as an example of an information processing device capable of preventing or reducing fraudulent acts efficiently and effectively while reducing the risk of reporting false detection to buyers. An information processing device of a relevant embodiment is not limited to the detection terminal 3. For example, other devices, such as the self-POS terminal 1, the camera 2, the monitoring terminal 4, or the recording device 5 may be provided with the detection means 311, the acquisition means 312, the reporting means 313, and the second reporting means 314, as described for the first embodiment, and each may device or unit may function as an information processing device of an embodiment.

Alternatively, the detection terminal 3 need not have all of the described functions, and an information processing system may be implemented by providing a part of the functions in the self-POS terminal 1, the camera 2, the monitoring terminal 4, the recording device 5, and/or another device. For example, in the first embodiment, the detection terminal 3 functions as the detection means 311. The self-POS terminal 1 has functions as the acquisition means 312, the reporting means 313, and the second reporting means 314. The self-POS terminal 1 also has the report table 331. According to this configuration, when the detection terminal 3 detects a buyer's act requiring a report to the self-POS terminal 1, that is, a reporting act, the detection terminal 3 outputs the information to the self-POS terminal 1. The self-POS terminal 1 acquires the type of reporting act from that report, and then reports the type of reporting act to the monitoring terminal 4. Further, when information about the reporting act is acquired, the self-POS terminal 1 specifies the type and sets the detection flag in the report table 331 as "1." Then, when the detection flags for a plurality of types of reporting acts become "1," during the same transaction, it is reported by a popup screen or the like on the touch panel 105 that the reporting act has been detected. With such a configuration, it is still possible to achieve an advantageous effect of being able to prevent or reduce fraudulent acts efficiently and effectively while reducing the risk of reporting false detection to buyers.

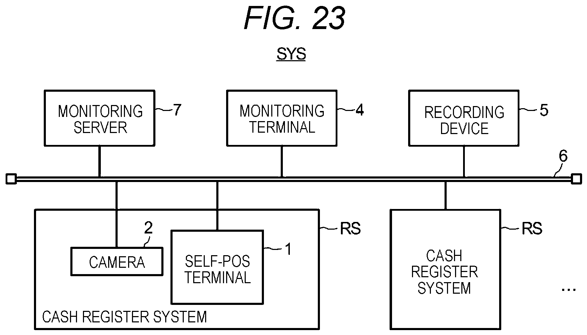

In an embodiment, such as shown in FIG. 1, a detection terminal 3 is provided for each cash register system RS. However, as shown in FIG. 23, the detection terminal 3 may be eliminated from the cash register system RS, and instead a detection server 7 shared among multiple cash register systems RS can be connected to the communication network 6 to configure the self-checkout system SYS. The detection server 7 is a computer configured to perform the described functions of the detection terminal 3 for each of several cash register systems RS. With such a configuration, an effect similar to the first or second embodiments can be achieved.

The types of reporting acts to be detected by the detection means 311 are not limited to the five reporting act items "omitted scan," "weight error," "expensive merchandise error," "cart-bottom merchandise error," and "number of purchased items: large." For example, when an act of placing merchandise without a bar code attached thereto without performing selection operation on the touch panel 105 is detected, the reporting act item "barcodeless merchandise error" may be detected. For example, when an act of touching the "Accounting" touch button is detected while merchandise remains on the basket stand 102, the reporting act item "unregistered merchandise error" may also be detected.

In addition, embodiments of the present disclosure are described above, but these embodiments are presented as an example, and are not intended to limit the scope of the disclosure. These new embodiments can be realized in a variety of other forms, and various omissions, replacements and changes can be made, without departing from the scope of the disclosure. These embodiments and variations thereof are included in the scope of the disclosure, and provided in the scope of the disclosure as described in the appended claims.

## Claims

1. A fraudulent act detection device (3) for cash register systems, the device comprising:
a storage unit (333);
a communication interface (35); and
a processor (31) configured to:
receive camera images from a camera positioned to acquire images of a customer at a point-of-sale terminal;
receive event signals from the point-of-sale terminal corresponding to operations of the customer at the point-of- sale terminal;
process a camera image received from the camera to detect a camera event corresponding to operations of the customer at the point-of-sale terminal;
store a terminal event indicated in the received event signals in an event log of the storage unit;
detect reportable events of different types related to possible fraudulent acts of the customer at the point-of- sale terminal based on at least one of the camera event and the event log;
set a flag indicator for a first type act to indicate the detection of a first type reportable event;
set a flag indicator for a second type act to indicate the detection of a second type reportable event; and
output a report notification to the point-of-sale terminal if the number of set flag indicators indicating the detection of reportable events exceeds a reporting threshold value, the report notification causing the point-of- sale terminal to display a warning notification to the customer at the point-of-sale terminal.

2. The device according to claim 1, wherein the processor is configured to compare the number of set flag indicators to the reporting threshold value only when the customer begins a settlement operation at the point-of-sale terminal.

3. A fraudulent act detection device for cash register systems (3), the device comprising:
a storage unit (333);
a communication interface (35); and
a processor (31) configured to:
receive camera images from a camera positioned to acquire images of a customer at a point-of-sale terminal;
receive event signals from the point-of-sale terminal corresponding to operations of the customer at the point-of-sale terminal;
process a camera image received from the camera to detect a camera event corresponding to operations of the customer at the point-of- sale terminal;
store a terminal event indicated in the received event signals in an event log of the storage unit;
detect reportable events of different types related to possible fraudulent acts of the customer at the point-of- sale terminal based on at least one of the camera event and the event log;
set a flag indicator for a first type act to indicate the detection of a first type reportable event;
set a flag indicator for a second type act to indicate the detection of a second type reportable event; and
output a report notification to the point-of-sale terminal if the set flag indicators indicating the detection of reportable events match a preset reporting condition, the report notification causing the point-of-sale terminal to display a warning notification to the customer at the point-of-sale terminal.

4. The device according to claim 3, wherein the processor is configured to compare the set flag indicators to the preset reporting condition only when the customer begins a settlement operation at the point-of-sale terminal.

5. The device according to any one of claims 1 to 4, wherein the processor is further configured to output a reportable act notification, via the communication interface, to a monitoring terminal each time a reportable event of any type is detected, the reportable act notification causing the monitoring terminal to display a warning notice to an operator of the monitoring terminal.

6. The device according to any one of claims 1 to 5, wherein the processor is configured to acquire the camera images from a plurality of cameras each respectively positioned to acquire images of customers at one of a plurality of point-of- sale terminals.

7. The device according to claim 6, wherein the processor is configured to receive event signals from the plurality of point-of-sale terminals.

8. The device according to any one of claims 1 to 7, wherein the report notification includes at least a portion of a camera image associated with the camera event of at least one reportable event.

9. The device according to any one of claims 1 to 8, wherein the processor is further configured to:
set a flag indicator for a third type act to indicate the detection of a third type reportable event; and
output the report notification to the point-of-sale terminal if the flag indicator for the third type act indicates the detection of the third type reportable event.

10. A fraudulent act detection method for cash register systems, the method comprising:
receiving camera images from a camera positioned to acquire images of a customer at a point-of-sale terminal;
receiving event signals from the point-of-sale terminal corresponding to operations of the customer at the point-of-sale terminal;
processing a camera image received from the camera to detect a camera event corresponding to operations of the customer at the point-of- sale terminal;
storing a terminal event indicated in the received event signals in an event log of a storage unit;
detecting reportable events of different types related to possible fraudulent acts of the customer at the point-of- sale terminal based on at least one of the camera event and the event log;
setting a flag indicator for a first type act to indicate the detection of a first type reportable event;
setting a flag indicator for a second type act to indicate the detection of a second type reportable event; and
outputting a report notification to the point-of-sale terminal if the number of set flag indicators indicating the detection of reportable events exceeds a reporting threshold value, the report notification causing the point-of-sale terminal to display a warning notification to the customer at the point-of-sale terminal.

11. The method according to claim 10, further comprising:
comparing the number of set flag indicators to the reporting threshold value only when the customer begins a settlement operation at the point-of-sale terminal.

12. The method according to claim 10 or 11, further comprising:
outputting a reportable act notification, via a communication interface, to a monitoring terminal each time a reportable event of any type is detected, the reportable act notification causing the monitoring terminal to display a warning notice to an operator of the monitoring terminal.

13. The method according to any one of claims 10 to 12, wherein camera images are acquired from a plurality of cameras each respectively positioned to acquire images of customers at one of a plurality of point-of-sale terminals, preferably wherein event signals are received from the plurality of point-of-sale terminals.

14. The method according to any one of claims 10 to 13, wherein the report notification includes at least a portion of a camera image associated with the camera event of at least one reportable event.

15. The method according to any one of claims 10 to 14, further comprising:
setting a flag indicator for a third type act to indicate the detection of a third type reportable event; and
outputting the report notification to the point-of-sale terminal if the flag indicator for the third type act indicates the detection of the third type reportable event.
